# EUROPEAN PATENT APPLICATION

(11) **EP 2 293 652 A1**
(43) Date of publication of application: **09.03.2011**
(21) Application number: 08865037.9
(22) Date of filing: 08.12.2008
(51) Int. Cl.: H05B 37/02, H05B 33/08

(54) **MR16 TYPE HIGH POWER LED LAMP**

(30) Priority: 19.12.2007 CN 200710164780
(71) Applicant: Shen, Jinxiang, Zhejiang 314501 (CN)
(72) Inventor: Shen, Jinxiang, Zhejiang 314501 (CN)
(74) Representative: Kramer - Barske - Schmidtchen
(86) International application number: PCT/CN2008/001982
(87) International publication number: WO 2009/079924

(57) **Abstract**

The invention refers to a MR16 high power LED lamp, particularly a MR16 high power LED lamp which can adapt to working frequency alternating current or high frequency alternating current with nominal working voltage of 12V AC. The LED lamp comprises a driver and a LED illuminant, wherein, the driver comprises a rectifying circuit, a constant current circuit, and an output circuit. An input end of the rectifying circuit inputs low-voltage alternating current with working frequency / high frequency of 12V. When the input end is input with low frequency alternating current of 12V or high frequency alternating current of 12V, the LED lamp is lighted, and value of resistance R is regulated for ensuring current value, namely value of constant current.

## Description

### Technical Field:

The invention refers to a MR16 high power LED lamp, particularly a MR16 high power LED lamp which can adapt to working frequency alternating current or high frequency alternating current with nominal working voltage of 12V AC.

### Background Art:

The MR16 high power LED lamp with prior art normally operates at low-voltage alternating current with working frequency of 12V. Due to the fact that the low-voltage alternating current with working frequency of 12V is not really compatible with the input power supply that adopts high frequency alternating current of 12V output from high frequency electronic transformer, it's not possible to replace the conventional MR16 low-voltage tungsten halogen lamp which adopts high frequency alternating current of 12V output from high frequency electronic transformer directly with MR16 high power LED lamp that operates at low-voltage with working frequency of 12V. Looking from the trend of MR16 high power LED lamp, it's certainty that it will replace the conventional low-voltage tungsten halogen lamp. Though few products in prior art fit in with low-voltage alternating current with working frequency / high frequency of 12V, their reliability is affected due to complicated techniques, excessive components, over small packaging components, which in turn results in excessive costs that reduces their popularization and offsets the possibility to replace directly the conventional MR16 low-voltage tungsten halogen lamp. So far there are still no MR16 high power LED lamps with mature technique, stable performance and low cost which can adapt to both low-voltage working frequency alternating current and low-voltage high frequency alternating current applying to utility system.

### Contents of the invention:

The invention aims to overcome the defects of the prior art and come up with a MR16 high power LED lamp which can adapt to working frequency alternating current or high frequency alternating current with nominal working voltage of 12V AC.

To reach the aim, the MR16 high power LED lamp comprises a driver and a LED illuminant, wherein, the driver comprises a rectifying circuit, a constant current circuit, and an output circuit. An input end of the rectifying circuit inputs low-voltage alternating current with working frequency / high frequency. The said rectifying circuit is comprised of Schottky diode D1, D2, D3, D4 and electrolytic capacitor C1, wherein, the anode of Schottky diode D1 enters one end of the power supply after being connected to the cathode of D3, while the anode of Schottky diode D2 enters the other end of the power supply after being connected to the cathode of D4. The cathode of Schottky diode D1, the cathode of D2 and the anode of electrolytic capacitor C1 form, after connection, the positive polarity of the direct power supply, while the anode of Schottky diode D3, the anode of D4 and the cathode of electrolytic capacitor C1 form, after connection, the negative polarity of the direct power supply. The said constant current circuit consists of an integrated circuit (IC), electrolytic capacitor C2, and a resistor (R), wherein, the 1^{st} pin of IC is connected to the anode of C1 and one end of R, the 2^{nd} pin of IC is connected to the other end of R, the 3^{rd} pin is connected to the cathode of C1, the 5 ^{th} pin of IC is connected to one end of C2, and the other end of C2 is connected to the 3^{rd} pin of IC and the cathode of C1. The said output circuit consists of an integrated circuit (IC), Schottky diode D5, inductor L, and a high power LED illuminant, wherein, the 4^{th} pin of IC is connected to the cathode of Schottky diode D5 and one end of inductor L, the other end of inductor L is connected to the anode of the high power LED illuminant, the cathode of the high power LED illuminant is connected to the anode of Schottky diode D5 and the 3^{rd} pin of IC.

The said LED illuminant could be a single LED, or single LED combination.

This MR16 high power LED lamp features rational design, simple structure, stable performance of the driver circuit, high reliability, and long lifetime, etc. so that it's able to replace the conventional MR16 low-voltage tungsten halogen lamp which adopts high frequency electronic transformer as input voltage.

### Brief Description of The Drawings:

Figure 1 is the schematic block diagram of the invention;
Figure 2 is the circuit diagram of the invention.

### Best Mode:

### Examples of carrying out the invention:

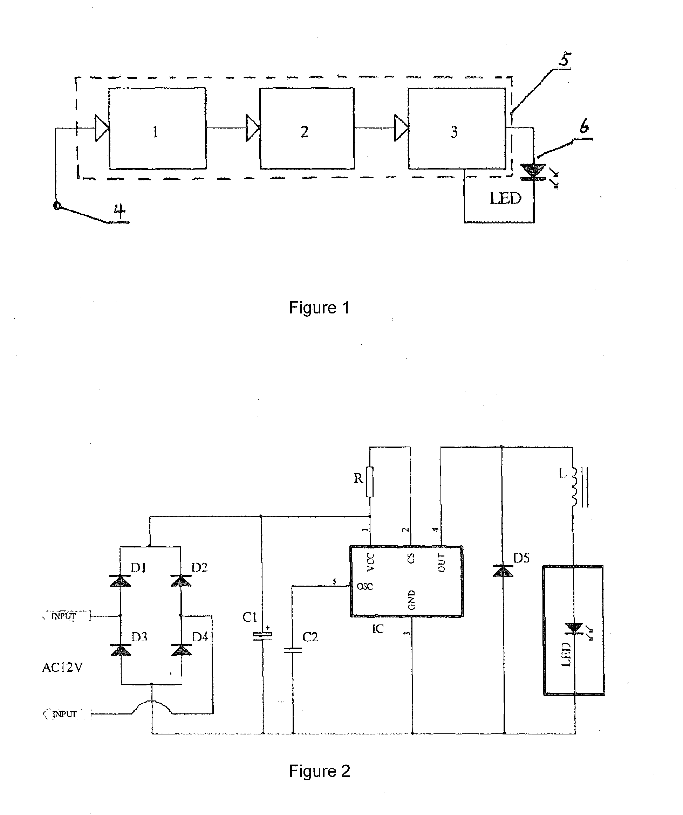

As illustrated in figure 1, this MR16 high power LED lamp comprises a driver 5 and a LED illuminant 6, wherein, the driver comprises a rectifying circuit 1, a constant current circuit 2, and an output circuit 3. An input end 4 of the rectifying circuit inputs low-voltage alternating current with working frequency /high frequency of 12V. As illustrated in figure 2, the rectifying circuit 1 of the said driver 5 is comprised of Schottky diode D1, D2, D3, D4 and electrolytic capacitor C1, wherein, the anode of Schottky diode D1 enters one end of the power supply after being connected to the cathode of D3, while the anode of Schottky diode D2 enters the other end of the power supply after being connected to the cathode of D4. The cathode of Schottky diode D1, the cathode of D2 and the anode of electrolytic capacitor C1 form, after connection, the positive polarity of the direct power supply, while the anode of Schottky diode D3, the anode of D4 and the cathode of electrolytic capacitor C1 form, after connection, the negative polarity of the direct power supply. The constant current circuit 2 of the said driver 5 consists of an integrated circuit IC, electrolytic capacitor C2, and a resistor R, wherein, the 1^{st} pin of IC is connected to the anode of C1 and one end of R, the 2^{nd} pin of IC is connected to the other end of R, the 3^{rd} pin is connected to the cathode of C1, the 5^{th} pin of IC is connected to one end of C2, and the other end of C2 is connected to the 3^{rd} pin of IC and the cathode of C1. The output circuit 3 of the said driver 5 consists of an integrated circuit IC, Schottky diode D5, inductor L, and a high power LED illuminant, wherein, the 4th pin of IC is connected to the cathode of Schottky diode D5 and one end of inductor L, the other end of inductor L is connected to the anode of the high power LED illuminant, the cathode of the high power LED illuminant is connected to the anode of Schottky diode D5 and the 3rd pin of IC.

All the D1, D2, D3, D4 and D5 are Schottky diode. Since the rectifying action of Schottky diode solely depends on the majority of current carriers, the recombination of a small number of current carriers is avoided, and the switch performance is significantly improved. The recovery time equals only to the charge-discharge time of the barrier capacitance, therefore the reverse recovery time is less than 10ns, and furthermore, the forward voltage drop is lower than normal junction diode, with a typical value of about 0.4V, leading to low power consumption but high efficiency. Due to the above-mentioned features, it distinguishes itself from other junction diodes in terms of high frequency rectifying circuit techniques, let alone its low voltage characteristics in terms of low frequency rectifying circuit techniques. Therefore, the Schottky diode is compatible with the rectifying circuit, no matter input with working frequency alternating current (12V, frequency 50HZ) or high frequency alternating current (12V, frequency≥20KHZ). The integrated circuit (IC) may adopt the high frequency LED constant current chip AE7150 with package type TO-252 2L. When the input end 4 is input with low frequency alternating current of 12V or high frequency alternating current of 12V, the LED illuminant 6 is lighted, and value of resistance R is regulated for ensuring current value, namely value of constant current. The products out of this invention fit in with max. 3 x 1W high power LED illuminant 6, or 1 x 1W high power LED illuminant 6, or 1 x 3W high power LED illuminant 6.

## Claims

1. A MR16 high power LED lamp comprises a driver (5) and a LED illuminant (6), wherein, the driver(5) comprises a rectifying circuit (1), a constant current circuit (2), and an output circuit (3). An input end (4) of the rectifying circuit inputs low-voltage alternating current with working frequency / high frequency. It's **characterized in that** the rectifying circuit (1) of the said driver (5) is comprised of Schottky diode D1, D2, D3, D4 and electrolytic capacitor C1, wherein, the anode of Schottky diode D1 enters one end of the power supply after being connected to the cathode of D3, while the anode of Schottky diode D2 enters the other end of the power supply after being connected to the cathode of D4. The cathode of Schottky diode D1, the cathode of D2 and the anode of electrolytic capacitor C1 form, after connection, the positive polarity of the direct power supply, while the anode of Schottky diode D3, the anode of D4 and the cathode of electrolytic capacitor C1 form, after connection, the negative polarity of the direct power supply.

2. the MR16 high power LED lamp as set forth in claim 1 is **characterized in that** the constant current circuit (2) of the said driver (5) consists of an integrated circuit (IC), electrolytic capacitor C2, and a resistor (R), wherein, the 1^{st} pin of IC is connected to the anode of C1 and one end of R, the 2^{nd} pin of IC is connected to the other end of R, the 3^{rd} pin is connected to the cathode of C1, the 5^{th} pin of IC is connected to one end of C2, and the other end of C2 is connected to the 3^{rd} pin of IC and the cathode of C1.

3. the MR16 high power LED lamp as set forth in claim 1 or 2 is **characterized in that** the output circuit (3) of the said driver (5) consists of an integrated circuit (IC), Schottky diode D5, inductor L, and a high power LED illuminant, wherein, the 4^{th} pin of IC is connected to the cathode of Schottky diode D5 and one end of inductor L, the other end of inductor L is connected to the anode of the high power LED illuminant, the cathode of the high power LED illuminant is connected to the anode of Schottky diode D5 and the 3^{rd} pin of IC.
